# EUROPÄISCHE PATENTSCHRIFT

(11) **EP 1 990 160 B1**
(45) Veröffentlichungstag und Bekanntmachung des Hinweises auf die Patenterteilung: **26.10.2011**
(21) Anmeldenummer: 08008226.6
(22) Anmeldetag: 30.04.2008
(51) Int. Cl.: B27M 1/08, B27C 9/04, B27C 3/04, B23B 39/16

(54) **Durchlaufbohrmaschine**
Through feed drilling machine
Foreuse avec alimentation en continu

(30) Priorität: 11.05.2007 DE 102007022702
(43) Veröffentlichungstag der Anmeldung: 12.11.2008
(73) Patentinhaber: IMA Klessmann GmbH Holzbearbeitungssysteme, 32312 Lübbecke (DE)
(72) Erfinder: Hermsmeier, Wilfried, 32479 Hille (DE); Bierenriede, Hartmut, 32351 Stemwede-Oppenwehe (DE); Tielke, Michael, 31691 Helpsen (DE)
(74) Vertreter: Schober, Mirko

(56) Entgegenhaltungen:
- DE-A1- 2 251 012
- DE-A1- 2 939 434
- DE-A1- 19 516 225
- DE-A1-102004 016 117
- DE-U1- 29 801 885
- US-A- 5 107 910

## Beschreibung

Die Erfindung bezieht sich auf eine Durchlaufbohrmaschine gemäß den Merkmalen im Oberbegriff des Patentanspruchs 1.

Bei einer solchen Maschine handelt es sich vornehmlich um eine Holzbearbeitungsmaschine zum Bearbeiten von plattenförmigen Werkstücken aus Holz und/oder Holzaustauschstoffen. In erster Linie sind es Möbelteile, die mit Bohrungen in Form von Reihen oder sonstigen Lochbildern versehen werden, wie es insbesondere bei Korpus- und Regalteilen der Fall ist. Durchlaufbohrmaschinen werden in eine Fertigungsstraße integriert und schließen hierbei in der Regel an eine im kontinuierlichen Durchlauf arbeitende Kantenbearbeitungsmaschine an, mit der die bearbeiteten Plattenkanten zugleich mit einem Deckstreifen beschichtet werden. Die Durchlaufgeschwindigkeit solcher Maschinen ist relativ hoch, und es besteht ein Problem darin, die Kapazität der Durchlaufbohrmaschinen an die der vorgeschalteten Durchlaufmaschinen anzupassen. Dies ist vor allem bei der kommissionsweisen Fertigung von Möbelteilen der Fall, bei der unterschiedliche Bohrbilder an den Werkstücken und verschiedene Lochdurchmesser berücksichtigt werden müssen. Entsprechend häufig müssen die Bohraggregate umgerüstet und die Bohrköpfe daran ausgewechselt werden.

Da bei den bekannten Bohrmaschinen nur ein einziges Bohrwerk vorhanden ist, führt die Umrüstung der Bohraggregate zu Stillstandszeiten, die für den Fertigungsablauf hinderlich sind. Man hat deshalb bereits in einer Fertigungsstraße zwei der Durchlaufbohrmaschinen in bekannter Ausführung quer zur Werkstücktransportrichtung verfahrbar angeordnet, um wechselweise die jeweils aus der Betriebslage herausgefahrene Maschine umrüsten zu können. Zum einen ist der Aufwand für zwei komplette Maschinen hoch und zum anderen ist die Anbindung der jeweiligen Maschine an das Werkstücktransportsystem aufwendig.

Das Dokument DE 195 18 965 A1 beschreibt ein Bearbeitungszentrum in Gestalt einer Holzbearbeitungsmaschine, mit dem plattenförmige Bauteile bearbeitet werden. Diese Maschine weist einen Ausleger auf, an dessen beiden Längsseiten je eine Spindeleinheit verfahrbar gelagert ist. Mit diesen Spindeleinheiten können auch Lochreihen gebohrt werden. Dazu werden automatisch in die Spindeleinheiten Bohrwerkzeuge eingesetzt, wozu die betreffende Spindeleinheit einen am einen Ende des Auslegers befindlichen Werkzeugwechsler mit Werkzeugmagazin anfährt. Gesondert anzufahrende Rüstplätze sind für Maschinen dieses Typs mit einspindeligen Spindeleinheiten nicht erforderlich.

Aus der DE 298 01 885 U1 ist eine Durchlaufmaschine gemäß dem Oberbegriff des Anspruchs 1 bekannt.

Der Erfindung liegt die Aufgabe zugrunde, eine Durchlaufbohrmaschine der eingangs genannten Art zu schaffen, die eine Umrüstung der Bohraggregate ermöglicht, ohne die Rüstzeit als Stillstandszeit der Maschine hinnehmen zu müssen.

Diese Aufgabe wird mit einer die Gesamtheit der Merkmale des Patentanspruchs 1 aufweisenden Durchlaufbohrmaschine gelöst.

Für die Erfindung ist wesentlich, daß die Bohrstation und die durch die Maschine hindurchführende Werkstücktransportvorrichtung ortsfest angeordnet sind und jeweils nur das eine der beiden Bohrwerke in die Bohrstation eingefahren und zugleich das zweite Bohrwerk daraus heraus in seine Rüstposition gefahren wird. Die Zeit, die für das am Rüstplatz befindliche Bohrwerk benötigt wird, um die Bohraggregate umzurüsten, geht nicht als Stillstandszeit der Maschine verloren. Zwar nimmt der Wechsel der Bohrwerke in der Bohrstation eine geraume Zeit in Anspruch, diese Zeit kann ohne weiteres an den Maschinentakt angepaßt werden und ist als Verlustzeit vernachlässigbar.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: die Draufsicht auf eine Durchlaufbohrmaschine in einer ersten Bearbeitungsposition,
- Fig. 2: die Draufsicht auf die Durchlaufbohrmaschine nach Fig. 1 in einer zweiten Bearbeitungsposition und
- Fig. 3: eine teilgeschnittene Seitansicht der Durch laufbohrmaschine nach den Figuren 1 und 2.

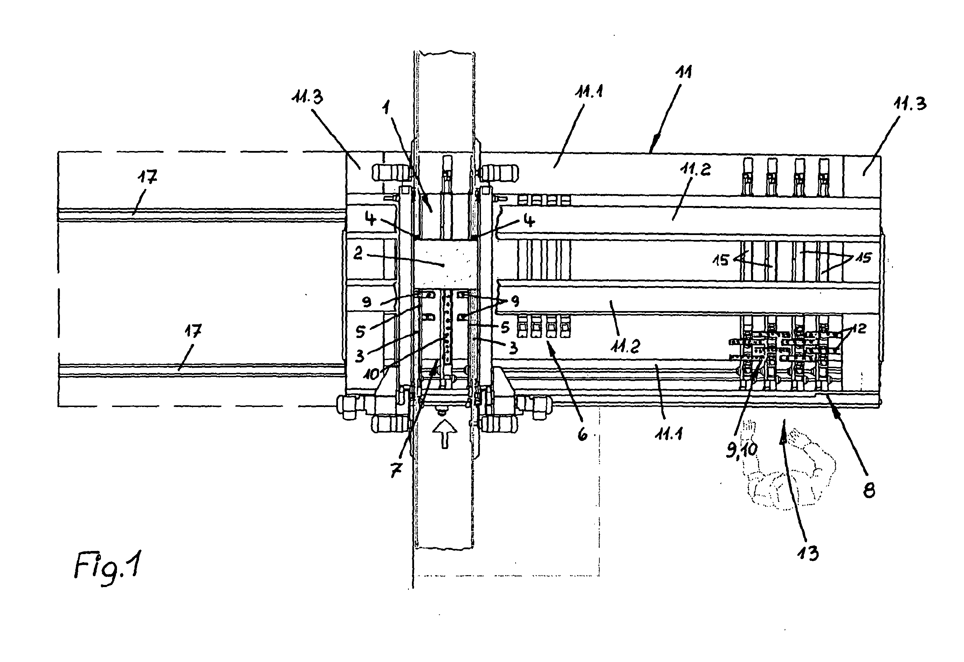

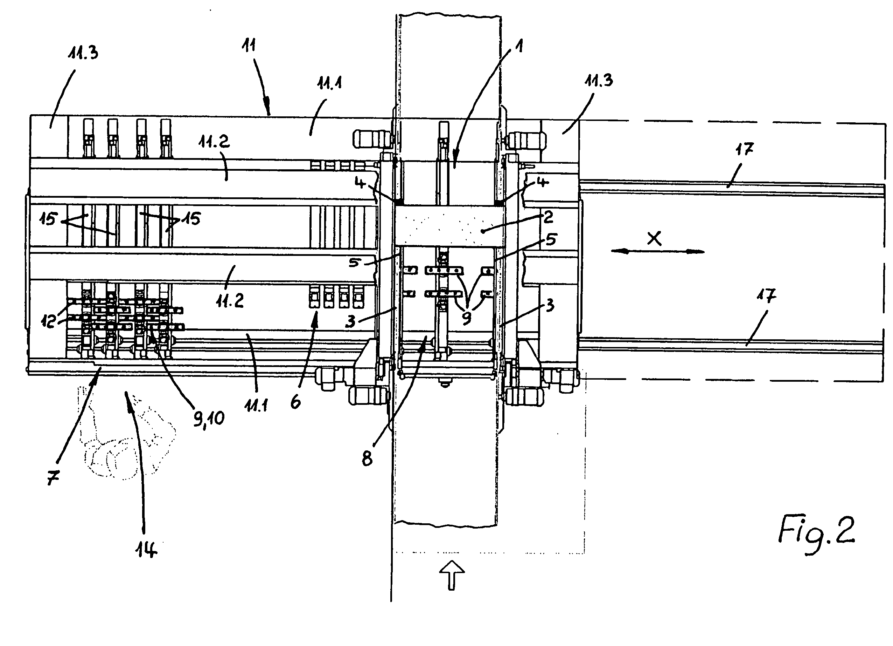

Wie in den Figuren 1 und 2 erkennbar ist, weist die Durchlaufbohrmaschine eine Bohrstation 1 auf, an der plattenförmige Werkstücke 2 mit sogenannten Vertikalbohrungen versehen werden. Hierbei sind die Werkstücke 2 mit ihrer Plattenebene horizontal ausgerichtet, und die Vertikalbohrungen werden von der Oberseite und/oder der Unterseite her in die Werkstücke 2 eingebracht. Bei der dargestellten Maschine erfolgt das Einbohren von der Unterseite der Werkstücke 2 her.

Durch die Bohrstation 1 hindurch führt eine WerkstückTransportvorrichtung 3, die zwei mit Abstand voneinander angeordnete, umlaufende Ketten oder Bänder aufweist, auf denen die in der Regel rechteckförmigen Werkstücke 2 im Bereich einander gegenüberliegender Ränder aufliegen. Um die Werkstücke in der Bohrstation 1 feststehend in einer vorbestimmten Bohrposition fixieren zu können, werden sie mittels der Transportvorrichtung 3 gegen Anschläge 4 gefahren. Neben den Obertrumen der Transportvorrichtung 3 sind Werkstück-Auflagerschienen 5 angeordnet, gegen die die zu bohrenden Werkstücke 2 verspannt werden, indem über ihre obenliegenden Seiten Werkstück-Niederhalter 6 verfahren werden, die mit nach unten ausfahrbaren Druckelementen die Werkstücke beaufschlagen.

Die Besonderheit der Maschine liegt darin, daß sie zwei Bohrwerke 7 und 8 aufweist, die bevorzugt mit identischen Bohraggregaten 9 und 10 ausgestattet sind. Die Bohraggregate 9, 10 weisen eine Mehr- oder Vielzahl von auswechselbaren Bohrköpfen 12 auf, die zu beliebigen Lochbildern, insbesondere zu Lochreihen, zusammengestellt werden können. In der Darstellung von Bild 1 ist das Bohrwerk 7 mit seinen Bohraggregaten 9 und 10 in Aktion, das zweite Bohrwerk 8 befindet sich an einem ihm zugeordneten Rüstplatz 13, der entsprechend der Darstellung von Fig. 1 rechts von der Bohrstation 1 mit Abstand davon angeordnet ist. In der Darstellung von Fig. 2 ist das zweite Bohrwerk 8 im Einsatz, und es befindet sich das erste Bohrwerk 7 an einem Rüstplatz 14, der links von der Bohrstation 1 mit Abstand angeordnet ist.

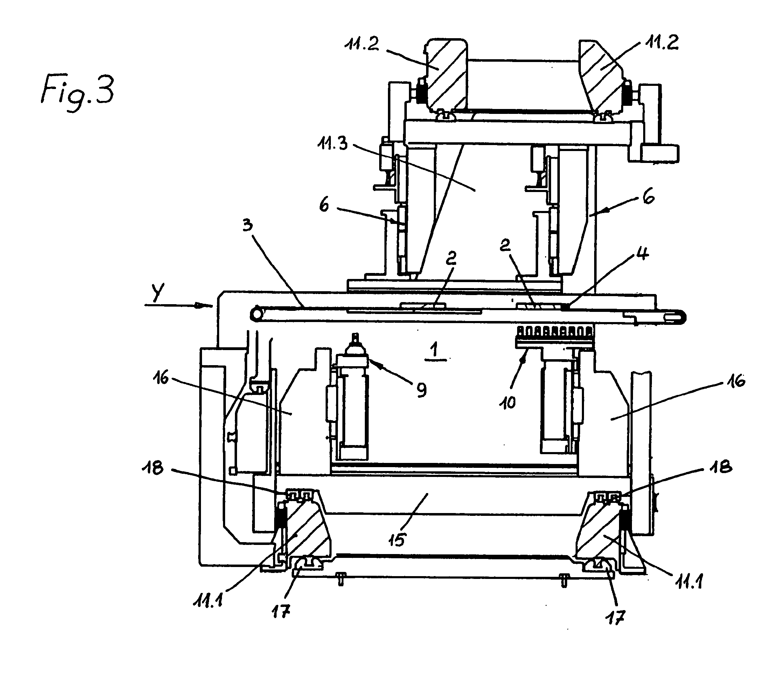

Die beiden Bohrwerke 7, 8 sind an einem Traggestell 11 angeordnet, welches relativ zur Bohrstation 1 quer zur Werkstücktransportvorrichtung 3 zwischen zwei Endlagen verfahren werden kann. Dies geschieht rechtwinklig zur Förderrichtung der Transportvorrichtung 3, die als Y-Achse der Maschine bezeichnet wird. Die dazu rechtwinklig stehende Maschinenachse, die X-Achse, entspricht der Verfahrrichtung des Traggestells 11. Wie auch aus Fig. 3 hervorgeht, besteht das Traggestell 11 aus zwei unteren, miteinander parallelen in Richtung der X-Achse sich erstreckenden Grundträgern 11.1, aus damit parallelen oberen Grundträgern 11.2 und aus Seitenständern 11.3, welche die Grundträger 11.1 und 11.2 miteinander verbinden. In Richtung der Y-Achse gesehen hat das Traggestell 11 einen rahmenartigen Aufbau, in dessen Innenraum die Bohrwerke 7 und 8 angeordnet sind.

Die beiden Bohrwerke 7, 8 weisen in der Y-Achse sich erstreckende, in der X-Achse verfahrbare Supporte 15 auf, die am Traggestell 11 geführt und an denen weitere in der Y-Achse verfahrbare Supporte 16 gelagert sind, auf denen die Bohraggregate 9, 10 angeordnet sind. Somit lassen sich für die Werkstückbearbeitung in der Bohrstation 1 die Bohraggregate 9, 10 mit den Bohrköpfen 12 und den daran aufgenommenen Bohrwerkzeugen in der X-Y-Ebene der Maschine verfahren, und sie sind in Richtung der darauf senkrecht stehenden Z-Achse zustellbar. Auf diese Weise lassen sich die Bohraggregate 9, 10 beider Bohrwerke 7, 8 bei den Bearbeitungszyklen in der Bohrstation 1 positionieren.

Der erste seitliche Rüstplatz 13 wird von dem Bohrwerk 8 dadurch angefahren, daß zum einen das Traggestell 11 entsprechend der Darstellung der Figuren 1 und 2 in seine rechte Endlage in Richtung der X-Achse verfahren wird und darüberhinaus auch die Bohraggregate 9, 10 am Bohrwerk 8 mittels der Supporte 15 in Relation zum Traggestell 11 nach rechts hin verfahren werden. Tritt das umgerüstete Bohrwerk 8 wieder in Aktion, wird in umgekehrter Bewegungsrichtung des Traggestells 11 und der Supporte 15 des Bohrwerks 7 der zweite Rüstplatz 14 auf der linken Seite der Bohrstation 1 angefahren. Hiernach befindet sich das Traggestell 1 in seiner zweiten, linken Endlage des Verfahrweges in Richtung der X-Achse. Beide Bohrwerke 7, 8 sind mit ihren Supporten 15 auf gemeinsamen Führungen 18 angeordnet, denn sie brauchen nicht aneinander vorbei verfahren zu werden.

Das Verfahren des Traggestells 11 mitsamt den beiden Bohrwerken 7, 8 und den Werkstück-Niederhaltern 6 erfolgt auf Führungen 17 die sich entsprechend in Richtung der X-Achse der Maschine erstrecken. Da bei Änderung eines Bohrbildes in der Regel auch die Position der Werkstück-Niederhalter 6 geändert werden muß, ist jedem der beiden Bohrwerke 7, 8 eine Anzahl von Werkstück-Niederhaltern 6 zugeordnet. Da ein Umrüsten der Werkstück-Niederhalter 6 nicht erforderlich ist, können sie beim Rüstvorgang des zugehörigen Bohrwerks 7, 8 in der Nähe der Bohrstation 1 verbleiben.

Grundsätzlich kann die Durchlaufbohrmaschine weitere Bohrwerke aufweisen, die in der Zeichnung nicht dargestellt sind und die für das Anbringen von Horizontalbohrungen an den Werkstücken bestimmt sind.

## Patentansprüche

1. Durchlaufbohrmaschine zum Anbringen von Bohrungen an plattenförmigen werkstücken (2), wie Möbel-Korpusteilen, im flachliegenden, getakteten Durchlauf mittels einer linear fördernden Transportvorrichtung (3), wobei die Maschine eine Bohrstation (1) für Vertikalbohrungen senkrecht zur Plattenebene der Werkstücke (2) aufweist, durch die hindurch sich die Werkstücktransportvorrichtung (3) erstreckt, und wobei ein Bohrwerk (7; 8) mit Bohraggregaten (9, 10), die mit umrüstbaren und/oder auswechselbaren Bohrköpfen (12) ausgestattet sind, vorhanden ist, wobei quer zur Transportvorrichtung (3) ein Traggestell (11) in die Bohrstation (1) kreuzender Anordnung zwischen zwei Endlagen verfahrbar gelagert ist, an dem zwei Bohrwerke (7, 8) mit zugehörigen Bohraggregaten (9, 10) in der Verfahrrichtung des Traggestells (11) jeweils bis in den ihnen benachbarten Endbereich des Traggestells (11) verfahrbar sind und die mittels Verfahren des Traggestells (11) von der ersten Endlage in die zweite einander abwechselnd an der Bohrstation (1) angeordnet sind und von denen jedes sich in seiner von der Bohrstation (1) weggefahrenen Position an einem zugehörigen Rüstplatz (13, 14) befindet, wobei die beiden Rüstplätze (13, 14) benachbart den beiden voneinander abliegenden Enden des Verfahrweges des Traggestells (11) angeordnet sind,
**dadurch gekennzeichnet,**
**dass** in der Bohrstation (1) beidseits der Transportvorrichtung (3) Auflagerschienen (5) zum Fixieren der Werkstücke (2) vorgesehen und am Traggestell (11) im Bereich jedes Bohrwerks (7, 8) die Werkstücke (2) gegen die Auflagerschienen (5) verspannende Niederhalter (6) justierbar angeordnet sind.

2. Durchlaufbohrmaschine nach Anspruch 1,
**dadurch gekennzeichnet,**
**dass** das Traggestell (11) nach Art eines Rahmens mit unteren Grundträgern (11.1) sowie oberen Grundträgern (11.2), die sich in der Verfahrrichtung erstrecken, und mit die Grundträger (11.1, 11.2) verbindenden Seitenständern (11.3) ausgeführt ist.

3. Durchlaufbohrmaschine nach Anspruch 1 oder 2,
**dadurch gekennzeichnet,**
**dass** die Bohraggregate (9, 10) beider Bohrwerke (7, 8) an zueinander kreuzend verfahrbaren Supporten (15, 16) angeordnet sind, von denen die Supporte (15) am Traggestell (11) aufgenommen sind.

4. Durchlaufbohrmaschine nach Anspruch 3,
**dadurch gekennzeichnet,**
**dass** die ersten Supporte (15) beider Bohrwerke (7, 8) auf gemeinsamen Führungen (18) angeordnet sind.

## Claims

1. Through feed drilling machine for incorporating holes in panel-form workpieces (2) such as furniture body parts, in a flat, cyclic operation by means of a linearly conveying transport device (3), wherein the machine comprises a drilling station (1) for vertical holes perpendicular to the panel plane of the workpieces (2), through which the workpiece transport device (3) extends and wherein a drilling arrangement (7; 8) is provided with drilling units (9, 10) which are equipped with re-settable and / or exchangeable drilling heads (12), wherein transversely to the transport device (3) a support frame (11) is mounted so that it can be moved into the drilling station (1) of crossing arrangement between two end positions, on which two drilling arrangements (7, 8) with associated drilling units (9, 10) can be moved in the travel direction of the support frame (11) respectively as far as into the end region of the support frame (11) adjacent to them and which are arranged by means of moving the support frame (11) from the first end position into the second alternately to each other on the drilling station (1) and of which each one is located in its position moved out from the drilling station (1) at an associated set-up place (13, 14), wherein the two set-up places (13, 14) are arranged adjacent to the two ends of the travel path of the support frame (11) lying away from each other,
**characterised in that**
in the drilling station (1) on both sides of the transport device (3) bearing rails (5) are provided for fixing the workpieces (2) and on the support frame (11) in the region of each drilling arrangement (7, 8) the workpieces (2) are arranged adjustably against hold-down elements (6) bracing the bearing rails (5).

2. Through feed drilling machine according to claim 1,
**characterised in that**
the support frame (11) is designed in the manner of a frame with lower base carriers (11.1) and upper base carriers (11.2) which extend in the travel direction and with side supports (11.3) connecting the base carriers (11.1, 11.2).

3. Through feed drilling machine according to claim 1 or 2,
**characterised in that**
the drilling units (9, 10) of both drilling arrangements (7, 8) are arranged on supports (15, 16) which can be moved in a crossing manner to each other, of which the supports (15) are incorporated on the support frame (11).

4. Through feed drilling machine according to claim 3,
**characterised in that**
the first supports (15) of both drilling arrangements (7, 8) are arranged on joint guides (18).

## Revendications

1. Foreuse avec alimentation en continu pour pratiquer des forures dans des pièces usinées (2), en forme de plaques, comme des éléments de corps de meubles, qui sont transportées à plat, en passage continu, cadencé, au moyen d'un dispositif de transport (3) linéaire, sachant que, pour l'exécution des forures, perpendiculairement au plan horizontal des pièces usinées (2), la machine est dotée d'un poste de forage (1), que traverse le dispositif de transport (3) de pièces usinées, et sachant qu'est prévu un appareil de forage (7; 8), avec des unités de forage (9, 10), qui sont équipées de têtes de forage (12) convertibles et / ou interchangeables, sachant que, selon un agencement croisant le poste de forage (1), est montée. transversalement par rapport au dispositif de transport (3), une structure de support (11) déplaçable entre deux positions finales, sur laquelle deux appareils de forage (7, 8), équipés d'unités de forage afférentes (9, 10), peuvent être individuellement déplacés dans la direction de déplacement de la structure de support (11), jusque dans la zone finale de ladite structure de support (11) voisine, et qui, au moyen du déplacement de ladite structure de support (11) de la première position finale à la deuxième position finale, sont ordonnés, alternativement, dans le poste de forage (1), et chacun d'eux, dans sa position éloignée dudit poste de forage (1), se trouvant à un poste d'outillage (13, 14) y associé, sachant que les deux postes d'outillage (13, 14) sont disposés dans le voisinage des deux extrémités du parcours de la structure de support (11), éloignées l'une de l'autre,
**caractérisée en ce que**, dans la station de forage (1), des deux côtés du dispositif de transport (3), des rails d'appui (5) sont prévus pour la fixation des pièces usinées, et que les pièces usinées (2) sont disposées, sur la structure de support (11), dans la région de chaque appareil de forage (7, 8), en pouvant être ajustées contre les éléments de retenue (6), qui calent les rails d'appui (5).

2. Foreuse avec alimentation en continu selon la revendication 1, **caractérisée en ce que** la structure de support (11) est réalisée à la manière d'un cadre, avec des supports de base inférieurs (11.1) ainsi que des supports de base supérieurs (11.2), qui s'étendent dans la direction de déplacement, et avec des supports latéraux (11.3), qui relient lesdits supports de base (11.1, 11.2).

3. Foreuse avec alimentation en continu selon revendication 1 ou 2, **caractérisée en ce que** les unités de forage (9, 10) des deux appareils de forage (7, 8) sont associées à des supports (15, 16), déplaçables, en se croisant les uns les autres, les supports (15) étant reçus sur la structure de support (11).

4. Foreuse avec alimentation en continu selon la revendication 3, **caractérisée en ce que** les premiers supports (15) des deux appareils de forage (7, 8) sont disposés sur des guides communs (18).
